# FASCICULE DE BREVET EUROPEEN

(11) **EP 0 508 913 B1**
(45) Date de publication et mention de la délivrance du brevet: **27.12.1995**
(21) Numéro de dépôt: 92420110.6
(22) Date de dépôt: 07.04.1992
(51) Int. Cl.: B65G 47/92, H01F 7/02

(54) **Dispositif d'accrochage et appareil de suspension de l'un ou l'autre de plusieurs échantillons**
Einfangvorrichtung und Gerät zum Aufhängen einer beliebigen Probe aus mehreren Proben
Catching device and apparatus for suspension of any one out of several samples

(30) Priorité: 10.04.1991 FR 9104665
(43) Date de publication de la demande: 14.10.1992
(73) Titulaire: ASSOCIATION DE GESTION DE L'ECOLE FRANCAISE DE PAPETERIE ET DE L'IMPRIMERIE, F-75008 Paris (FR); Serra Tosio, Jean-Marie, F-38240 Meylan (FR); Chave, Yves, 38610 Gieres (FR)
(72) Inventeur: Serra-Tosio, Jean-Marie, F-38240 Meylan (FR); Chave, Yves, F-38610 Gieres (FR)
(74) Mandataire: de Beaumont, Michel

(56) Documents cités:
- DE-C- 240 449
- DE-C- 967 514
- US-A- 2 547 990

## Description

La présente invention concerne un dispositif d'accrochage permettant de suspendre de façon amovible des objets et une application de ce dispositif à un appareil pour peser des échantillons soumis à une atmosphère contrôlée.

Il existe plusieurs dispositifs pour suspendre un objet, tel qu'une bande de papier. Parmi les plus courants, on peut citer le crochet et la pince. Dans le cadre d'une automatisation de la suspension d'objets légers, ces dispositifs sont difficilement envisageables car les mouvements d'accrochage et de décrochage sont trop complexes.

Dans certaines applications, on souhaite déterminer les variations de masse d'échantillons soumis à une atmosphère contrôlée, par exemple en humidité. Classiquement, on accroche un échantillon à une balance dans une enceinte étanche, on soumet l'enceinte à des taux d'humidité connus, et on relève les variations de masse sur la balance.

Dans le cas d'essais sur plusieurs échantillons, une enceinte commune munie d'une balance par échantillon n'est pas envisageable car les balances sont coûteuses. En outre, les dispositifs classiques et simples d'accrochage d'échantillons sur une balance nécessitent une intervention manuelle pour l'accrochage et/ou le décrochage d'échantillon, ce qui interdit de placer plusieurs échantillons dans l'enceinte et de les peser successivement sans perturber l'atmosphère de l'enceinte, sauf à prévoir des systèmes complexes et encombrants tels que des boîtes à gants, des commandes par électro-aimants ou des robots. On procède donc classiquement au test de chaque échantillon unitairement, ce qui est long et fastidieux.

Un objet de la présente invention est donc de prévoir un appareil simple de pesée de l'un ou l'autre de plusieurs échantillons placés dans une enceinte soumise à une même atmosphère contrôlée.

Un objet plus général de la présente invention est de prévoir un dispositif simple d'accrochage d'un échantillon, à décrochage facile.

Un autre objet général de la présente invention est de prévoir un appareil permettant d'accrocher à un support et de l'en décrocher l'un ou l'autre de plusieurs échantillons placés dans une enceinte fermée.

Un dispositif d'accrochage selon la présente invention comprend une pièce femelle amagnétique comprenant une ouverture débouchant dans une face d'accrochage de la pièce et un aimant logé de manière fixe dans une cavité en retrait par rapport à l'ouverture d'accrochage ; et une pièce mâle comprenant une partie à section circulaire en un matériau ferromagnétique, de diamètre supérieur à la plus petite dimension de ladite ouverture, et étant destinée à être attirée par l'aimant contre la face d'accrochage en se centrant dans l'ouverture.

Selon un mode de réalisation de la présente invention, la partie à section circulaire est une partie sphérique et la cavité est cylindrique.

Selon un mode de réalisation de la présente invention, l'une des pièces femelle ou mâle est reliée à un support par l'intermédiaire d'un ressort.

La présente invention prévoit aussi un appareil pour suspendre l'un ou l'autre de plusieurs objets à un support. Le support est relié à l'une des pièces femelle ou mâle susmentionnée. L'appareil comprend : un plateau tournant mobile verticalement et comprenant des trous sur un cercle près des bords du plateau ; des éléments d'accrochage, correspondant chacun à l'autre des pièces femelle ou mâle susmentionnée, logés dans les trous et auxquels sont suspendus des objets ; et une butée fixée à chaque autre pièce sous le plateau.

Selon un mode de réalisation de l'invention, ledit support est un bras d'une balance.

Selon un mode de réalisation de l'invention, les échantillons sont soumis à une atmosphère contrôlée en humidité.

Selon un mode de réalisation de l'invention, l'appareil comprend : des moyens pour entraîner le plateau en rotation ; des moyens pour détecter la position en rotation du plateau ; et des moyens pour placer le plateau verticalement entre une position basse de décrochage et une position haute d'accrochage.

Selon un mode de réalisation de l'invention, l'appareil comprend des moyens pour chauffer l'atmosphère contrôlée.

Ces objets, caractéristiques et avantages ainsi que d'autres de la présente invention seront exposés plus en détail dans la description suivante de modes de réalisation particuliers faite en relation avec les figures jointes parmi lesquelles :
Les figures 1A et 1B illustrent un mode de réalisation d'un dispositif d'accrochage selon la présente invention, respectivement en position décrochée et en position accrochée ;
la figure 2 illustre un autre mode de réalisation du dispositif d'accrochage selon la présente invention ;
la figure 3 illustre un mode de réalisation d'un appareil selon la présente invention pour suspendre à un support l'un ou l'autre de plusieurs objets en utilisant le dispositif d'accrochage de la figure 2 ; et
la figure 4 représente un appareil pour peser, selon le principe de l'appareil de la figure 3, l'un ou l'autre de plusieurs échantillons soumis à une atmosphère contrôlée avec une seule balance.

Dans les figures, des mêmes références désignent des mêmes éléments.

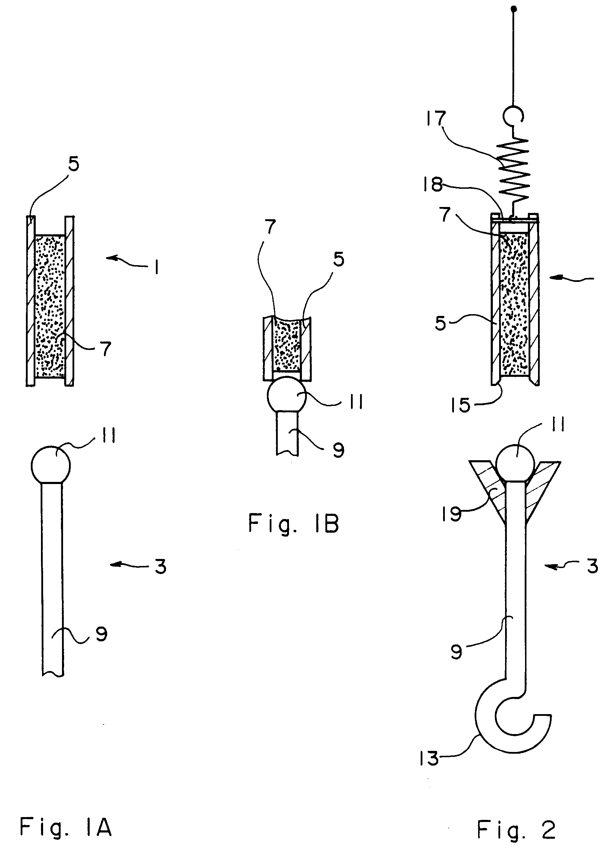

Les figures 1A et 1B illustrent le dispositif d'accrochage selon la présente invention comprenant deux parties, à savoir une pièce femelle 1 et une pièce mâle 3. La pièce femelle 1 comprend un cylindre vertical creux 5 en matériau amagnétique dans lequel est fixé un aimant permanent 7 en retrait par rapport à l'extrémité inférieure du cylindre. L'aimant peut être emmanché dans le cylindre ou collé. Le cylindre est relié à un support ( non représenté ) de diverses manières possibles. La partie supérieure du cylindre est par exemple emmanchée ou collée dans le support, la partie supérieure peut comprendre un filetage à visser dans le support, on peut visser dans la partie supérieure du cylindre une tige comprenant à sa partie supérieure un crochet, le cylindre peut être suspendu par l'intermédiaire d'un câble passant dans deux trous diamétralement opposés de la partie supérieure du cylindre...

La pièce mâle 3 comprend une tige 9 souple ou rigide munie à son extrémité inférieure d'un dispositif pour fixer un objet tel qu'un crochet ou un filetage ou tout autre moyen adéquat. Une bille en matériau ferromagnétique 11 de diamètre supérieur à celui de l'intérieur du cylindre 5, est fixée sur la partie supérieure de la tige 9. La tige peut être emmanchée ou collée dans un trou de la bille, ou la tige peut comprendre un filetage vissé dans un taraudage de la bille.

Comme le représente la figure 1B, lorsque le cylindre est approché de la bille 11, ou inversement, cette dernière est attirée par l'aimant et vient se plaquer contre l'extrémité inférieure du cylindre 5 en se centrant dans l'intérieur du cylindre. La force d'attraction la plus grande est obtenue quand la bille 11 rentre en contact avec l'aimant. Cette force peut être diminuée en montant l'aimant 7 de telle manière que la bille 11 ne rentre pas en contact avec l'aimant. La force peut être augmentée en choisissant une bille ou un aimant de diamètre plus grand ou bien un aimant plus long.

Le dispositif d'accrochage selon la présente invention présente plusieurs avantages. Ce dispositif constitue une liaison rotule, ce qui assure un alignement automatique lorsqu'il est mis sous traction, par exemple dans le cas où il est utilisé pour suspendre un objet à un support. La force d'accrochage est limitée et ajustable, ce qui assure une protection du support lorsque celui-ci est, par exemple, une balance très sensible.

La figure 2 représente un exemple de réalisation pratique du dispositif de la figure 1. La tige 9 est représentée avec un crochet 13 à son extrémité inférieure. Le bord intérieur du cylindre 5 comporte un chanfrein 15 pour faciliter le centrage de la bille 11 et la rotation de celle-ci. Le cylindre 5 est relié à son support ( non représenté ) par l'intermédiaire d'un ressort 17 relié à un axe 18 traversant la partie supérieure du cylindre, ce qui évite un désaccouplement intempestif de la bille 11 si le dispositif est soumis à des chocs. Le ressort 17 peut également être placé entre la bille 11 et l'objet à suspendre. La partie supérieure de la tige 9 comporte un cône 19 dans lequel est insérée la bille 11.

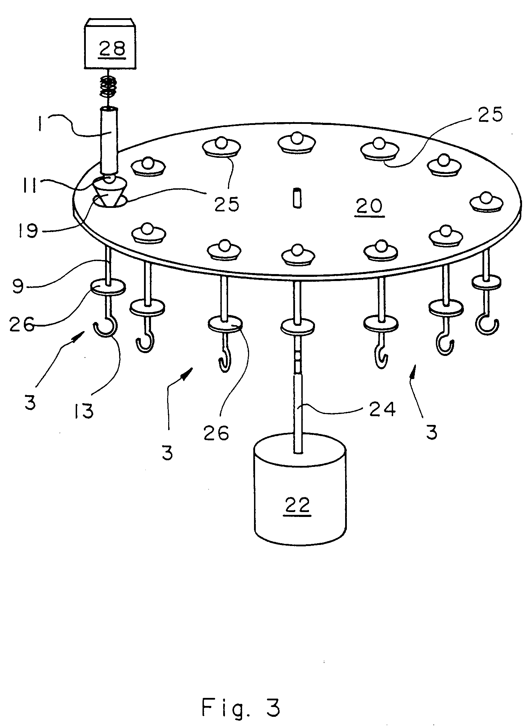

La figure 3 illustre une vue en perspective d'un mode de réalisation d'un appareil pour suspendre l'un ou l'autre d'une série d'objets sur un support, dans lequel le dispositif d'accrochage selon la présente invention est utilisé. Cet appareil comprend un plateau tournant 20 relié à un mécanisme d'actionnement 22 par l'intermédiaire d'un axe 24. Ce mécanisme d'actionnement permet de faire tourner le plateau ou de le déplacer verticalement. Le plateau 20 comprend des trous coniques 25 disposés circulairement près des bords du plateau. Dans chaque trou 25 est logé une pièce mâle 3 du type de celle illustrée en figure 2, le cône 19 de la pièce mâle venant se centrer dans le trou 25. Sur chaque tige 9 est fixée une rondelle 26 ou autre butée en saillie radiale.

Au dessus de la position radiale correspondant aux trous 25, une pièce femelle 1 du dispositif d'accrochage de la figure 2 est reliée à un support fixe 28.

Le fonctionnement de l'appareil est le suivant. Le plateau 20 est initialement à une position basse. Par l'intermédiaire du dispositif d'actionnement 22, on fait tourner le plateau pour faire correspondre le trou 25 souhaité avec la pièce femelle 1. Le plateau 20 est alors monté à une position haute où la bille 11 de la pièce mâle 3 logée dans le trou 25, est plaquée contre la pièce femelle 1. La bille se colle sur l'aimant de la pièce femelle et le plateau est abaissé à une position intermédiaire où le cône 19 est suffisamment dégagé du trou 25. Ainsi, un objet suspendu au crochet 13 de cette pièce mâle 3 est rendu solidaire du support 28 et indépendant du plateau 20.

Pour désolidariser la pièce mâle 3 du support 28, on abaisse le plateau 20 vers sa position basse de sorte qu'il vienne buter contre la rondelle 26 de la pièce mâle 3 accrochée. Ainsi, cette pièce mâle retombe et son cône 19 se centre dans le trou 25.

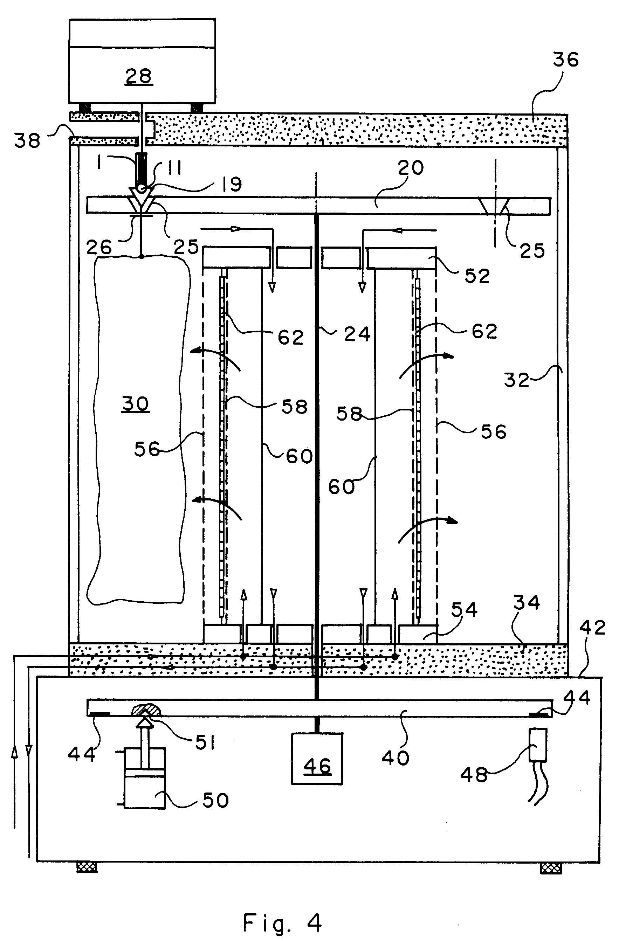

La figure 4 représente une application de l'appareil de la figure 3 au pesage de l'un ou l'autre de plusieurs échantillons 30, par exemple des bandes de papier, suspendus chacun à l'une des pièces mâles 3 et soumis à une atmosphère contrôlée, par exemple un débit d'air à un taux d'humidité et à une température choisis. L'appareil de la figure 3 ainsi que les échantillons sont disposés à l'intérieur d'une enceinte étanche délimitée par un cylindre vertical, de préférence transparent, 32 et des plaques inférieure 34 et supérieure 36. Le support 28 auquel est reliée la pièce femelle 1 du dispositif d'accrochage est ici un bras d'une balance, de préférence une balance électronique, montée sur la plaque 36. La pièce 1 est reliée à la balance 28 par l'intermédiaire d'un câble traversant un trou 37 de la plaque 36. Ce trou communique, comme cela est représenté, avec une ouverture 38 débouchant à l'extérieur. L'ouverture 38 assure une évacuation préférentielle des fuites d'air venant de l'enceinte par le trou 37 pour éviter que ces fuites, parfois chaudes ou corrosives, viennent au contact de la balance 28.

Le plateau porte-échantillon 20 est relié à un plateau inférieur 40 se trouvant dans un socle 42 par l'intermédiaire de l'axe 24 qui traverse la plaque inférieure 34. Le plateau inférieur 40 comporte à sa périphérie des repères de positionnement 44 correspondant aux trous 25.

Le fonctionnement de l'appareil est le suivant. Le plateau porte-échantillon 20 est entraîné en rotation par un moteur 46 se trouvant dans le socle 42. Dès qu'un repère 44 est détecté par un détecteur 48, la rotation est arrêtée et un trou 25 se trouve approximativement en face de la pièce femelle 1 du dispositif d'accrochage magnétique. Un vérin 50 agissant sur le plateau inférieur 40 lève alors le plateau porte-échantillon 20 à une position haute où la bille 11 de la pièce mâle du dispositif d'accrochage, se trouvant dans le trou 25, est plaquée contre la pièce femelle 1. Pour rendre le positionnement en rotation du plateau 20 plus précis, le sommet du piston du vérin 50 est conique et vient se loger dans un trou conique correspondant 51 du plateau 40.

Pour peser l'échantillon, le débit d'air dans l'enceinte est coupé pour ne pas fausser le pesage par le mouvement de l'échantillon ou par les fuites du trou 37 et le plateau 20 est abaissé, l'échantillon restant accroché à la balance. Le plateau 20 peut être abaissé jusqu'à une position intermédiaire. Mais, de préférence, l'échappement du vérin 50 sera prévu pour être lent, ce qui entraîne une descente lente du piston du vérin sous l'effet du poids de l'ensemble mobile, le pesage pouvant être effectué pendant la descente avant que le plateau 20 décroche l'échantillon suspendu.

Quand le plateau 20 atteint la rondelle 26 de la tige de la pièce mâle 3, l'échantillon est décroché et le cône 19 de la pièce mâle retombe dans son trou 25. Pour peser l'échantillon suivant, le plateau 20 est remis en rotation jusqu'à ce que le capteur 48 détecte le repère 44 souhaité.

L'appareil de la figure 4 est aussi muni d'un dispositif de distribution d'air conditionné disposé autour de l'axe 24. Ce dispositif comprend une plaque supérieure 52 et une plaque inférieure 54 fixée à la plaque 34, fermant les extrémités de trois cylindres concentriques creux extérieur 56, intermédiaire 58 et intérieur 60. Les cylindres 56 et 58 sont des cylindres diffuseurs d'air conditionné et sont constitués de cylindres percés ou de grillage.

L'enceinte contenant des échantillons 30 est alimentée en air conditionné selon un trajet représenté par des flèches. L'air conditionné arrive par des trous de la plaque 54 entre les cylindres 58 et 60 et pénètre dans l'enceinte en traversant les cylindres 58 et 56. L'air conditionné revient ensuite à l'intérieur du cylindre 60 par des trous dans la plaque supérieure 52 et est évacué par des trous de la plaque inférieure 54. Entre les cylindres 56 et 58 sont prévues des résistances de chauffage 62 permettant de chauffer l'air conditionné pour, par exemple, sécher les échantillons pour déterminer leur poids à sec.

L'appareil selon la présente invention est prévu pour être utilisé avec une source d'air à humidité régulée électroniquement mise au point par la demanderesse. Ainsi, l'ensemble de l'appareil selon la présente invention et de la source d'air à humidité régulée peut être entièrement commandé par ordinateur, ce dernier relevant les mesures de poids, les indications des capteurs 48, commandant le moteur 46 et le vérin 50 et fixant, par paliers maintenus pendant une durée suffisante, l'humidité du courant d'air dans l'enceinte.

Le dispositif d'accrochage selon la présente invention a été décrit dans le cadre d'une suspension d'objets, mais il n'est pas limité à cette application. Il est susceptible de nombreuses variantes et modifications qui apparaîtront à l'homme de l'art, par exemple, la bille 11 peut être remplacée par un cylindre et le logement de l'aimant peut être rectangulaire pour former une charnière au lieu d'une rotule.

## Revendications

1. Dispositif d'accrochage, caractérisé en ce qu'il comprend :
- une pièce femelle (1) amagnétique comprenant une ouverture débouchant dans une face d'accrochage de la pièce et un aimant (7) logé de manière fixe dans une cavité en retrait par rapport à l'ouverture d'accrochage ; et
- une pièce mâle (3) comprenant une partie à section circulaire (11) en un matériau ferromagnétique, de diamètre supérieur à la plus petite dimension de ladite ouverture, et étant destinée à être attirée par l'aimant contre la face d'accrochage en se centrant dans l'ouverture.

2. Dispositif selon la revendication 1, caractérisé en ce que la partie à section circulaire (11) est une partie sphérique et en ce que la cavité est cylindrique.

3. Dispositif selon la revendication 1, caractérisé en ce que l'une des pièces femelle (1) ou mâle (3) est reliée à un support (28) par l'intermédiaire d'un ressort (17).

4. Appareil pour suspendre l'un ou l'autre de plusieurs objets (30) à un support (28), caractérisé en ce que le support (28) est relié à l'une (1) des pièces femelle ou mâle selon la revendication 1 et en ce que l'appareil comprend :
- un plateau tournant (20) mobile verticalement et comprenant sur un cercle près de ses bords des trous (25) ;
- des éléments d'accrochage (3), correspondant chacun à l'autre des pièces femelle ou mâle selon la revendication 1, logés dans les trous (25) et auxquels sont suspendus des objets (30) ; et
- butée (26) fixée à chaque autre pièce sous le plateau (20).

5. Appareil selon la revendication 4 , caractérisé en ce que ledit support est un bras d'une balance (28).

6. Appareil selon la revendication 5, caractérisé en ce que les échantillons (30) sont soumis à une atmosphère contrôlée en humidité.

7. Appareil selon la revendication 4, caractérisé en ce qu'il comprend :
- des moyens (46) pour entraîner le plateau (20) en rotation ;
- des moyens (44, 48) pour détecter la position en rotation du plateau (20) ; et
- des moyens (50) pour placer le plateau (20) verticalement entre une position basse de décrochage et une position haute d'accrochage.

8. Appareil selon la revendication 6, caractérisé en ce qu'il comprend des moyens (62) pour chauffer l'atmosphère contrôlée.

## Claims

1. A coupling device, characterized in that it comprises:
- a non-magnetic female part (1) comprising an aperture ending in a coupling surface of the part and a magnet (7) fixed in a recess in an offset position with respect to said coupling aperture; and
- a male part (3) comprising a portion with a circular section (11) made of a ferromagnetic material, the diameter of which is greater than the smallest size of said aperture, and intended to be drawn by the magnet against the coupling surface while being centered in the aperture.

2. A device according to claim 1, characterized in that said portion with said circular section (11) is a spheric part and wherein said recess is cylindric.

3. A device according to claim 1, characterized in that one of said female or male parts is connected to a support (28) by means of a spring (17).

4. An apparatus for suspending any of a plurality of objects (30) to a support (28), characterized in that said support (28) is coupled to one of said female or male parts according to claim 1, and said apparatus comprises:
- a revolving plate (20), mobile vertically and comprising holes (25) in a circle close to its edges;
- coupling elements, each corresponding to the other of said female or male parts according to claim 1, accommodated in said holes (25) and to which objects (30) are suspended; and
- an abutment (26) fixed to each other part under said revolving plate (20).

5. An apparatus according to claim 4, characterized in that said support is a scale arm (28).

6. An apparatus according to claim 5, characterized in that samples (30) are subject to an atmosphere, the humidity of which is controlled.

7. An apparatus according to claim 4, characterized in that it comprises:
- means (46) for driving said plate (20) in rotation;
- means (44, 48) for detecting the rotation position of said plate (20); and
- means (50) for placing said plate (20) vertically between a low uncoupled position and a high coupled position.

8. An apparatus according to claim 6, characterized in that it comprises means (62) for heating the controlled atmosphere.

## Patentansprüche

1. Kupplungsvorrichtung, dadurch gekennzeichnet, daß sie folgendes aufweist:
- ein nicht-magnetisches, negatives bzw. weibliches Teil bzw. Aufnahme-Element (1), das eine Öffnung, die in einer Kupplungsoberfläche des Teils bzw. Elements endet, und einen Magneten (7) aufweist, der in einer Ausnehmung in einer versetzten Position bezüglich der Kupplungsöffnung befestigt ist; und
- ein positives bzw. männliches Teil bzw. Einsteck-Element (3), welches einen Teil mit einem kreisförmigen Abschnitt (11) aus einem ferromagnetischen Material aufweist, dessen Durchmesser größer ist als das geringste Maß der Öffnung, und wobei der Teil von dem Magneten gegen die Kupplungsoberfläche gezogen werden soll, während er in der Öffnung zentriert ist.

2. Vorrichtung gemäß Anspruch 1, dadurch gekennzeichnet, daß der Teil mit dem kreisförmigen Abschnitt (11) ein kugelförmiger bzw. sphärischer Teil ist und wobei die Ausnehmung zylindrisch ist.

3. Vorrichtung gemäß Anspruch 1, dadurch gekennzeichnet, daß entweder das Aufnahme-Element oder das Einsteck-Element mittels einer Feder (17) mit einem Träger (28) verbunden ist.

4. Vorrichtung zum Aufhängen irgendwelcher aus einer Vielzahl von Objekten bzw. Gegenständen (30) an einem Träger (28), dadurch gekennzeichnet, daß der Träger (28) entweder mit dem Aufnahme-Element oder mit dem Einsteck-Element gemäß Anspruch 1 gekuppelt ist, und daß die Vorrichtung folgendes aufweist:
- eine Drehplatte (20), die vertikal beweglich ist und Löcher (25) in einem Kreis nahe ihres Randes bzw. ihrer Kanten aufweist;
- Kupplungselemente, die jeweils dem anderen Element aus Aufnahme-Element und Einsteck-Element gemäß Anspruch 1 entsprechen und in den Löchern (25) aufgenommen sind und an denen die Gegenstände (30) aufgehängt sind; und
einen Anschlag (26), der an jedem der erwähnten anderen Elemente unter der Drehplatte (20) befestigt ist.

5. Vorrichtung gemäß Anspruch 4, dadurch gekennzeichnet, daß der Träger ein Arm bzw. Wiege-Element (28) einer Waage ist.

6. Vorrichtung gemäß Anspruch 5, dadurch gekennzeichnet, daß Muster bzw. Proben (30) einer Atmosphäre ausgesetzt sind, deren Feuchtigkeit gesteuert bzw. kontrolliert ist.

7. Vorrichtung gemäß Anspruch 4, dadurch gekennzeichnet, daß sie folgendes aufweist:
- Mittel (46) zum drehmäßigen Antrieb der Platte (20);
- Mittel (44, 48) zum Detektieren der Drehposition der Platte (20); und
- Mittel (50) zum vertikalen Versetzen der Platte (20) zwischen einer niedrigen, ungekuppelten Position und einer hohen, gekuppelten Position.

8. Vorrichtung gemäß Anspruch 6, dadurch gekennzeichnet, daß sie Mittel (62) zum Heizen der gesteuerten bzw. kontrollierten Atmosphäre aufweist.
